# EUROPÄISCHE PATENTSCHRIFT

(11) **EP 0 701 914 B1**
(45) Veröffentlichungstag und Bekanntmachung des Hinweises auf die Patenterteilung: **11.11.1998**
(21) Anmeldenummer: 95111460.2
(22) Anmeldetag: 20.07.1995
(51) Int. Cl.: B60G 17/015

(54) **Verfahren zur Steuerung oder Überwachung von Radaufhängungskomponenten in Kraftfahrzeugen**
Method for controlling or monitoring suspension components of motor vehicles
Procédé pour la commande ou la surveillance de composants de la suspension de véhicules à moteur

(30) Priorität: 15.09.1994 DE 4432893
(43) Veröffentlichungstag der Anmeldung: 20.03.1996
(73) Patentinhaber: Bayerische Motoren Werke Aktiengesellschaft, 80788 München (DE)
(72) Erfinder: Konik, Dieter, Dr., D-82211 Herrsching (DE); Wimmer, Markus, D-81475 München (DE)

(56) Entgegenhaltungen:
- EP-A- 0 552 435
- DE-A- 4 219 012
- DE-A- 4 315 917

## Beschreibung

Die Erfindung bezieht sich auf ein Verfahren zur Steuerung oder Überwachung von Radaufhängungskomponenten in Kraftfahrzeugen nach dem Oberbegriff des Patentanspruchs 1.

Ein derartiges Verfahren ist beispielsweise aus der DE 42 19 012 A1 bekannt. Bei diesem bekannten Verfahren wird bei der experimentellen Erkenntnis angesetzt, daß die Radgeschwindigkeit eines Kraftfahrzeuges entsprechend der Beschaffenheit der Straßenoberfläche Änderungen erfährt, wobei der Grad der Änderung der Radgeschwindigkeit eng mit der Rauhigkeit der Straßenoberfläche zusammenhängt. Bei dem bekannten System wird die Steifigkeit einer aktiven Radaufhängung demnach in Abhängigkeit von den Radgeschwindigkeiten entsprechend des gewünschten Fahrkomforts und der gewünschten Fahrbarkeit des Kraftfahrzeuges geändert. Diese Änderung findet auf der Grundlage zumindest einer Resonanzfrequenzkomponente statt, die zuvor aus einem Radgeschwindigkeitssignal extrahiert wurde. In einer Weiterbildung des bekannten Verfahrens wird zur Abschätzung der Resonanz zusätzlich die Radbeschleunigung auf der Grundlage der Radgeschwindigkeiten berechnet. Nach einem Vergleich der extrahierten Resonanzfrequenzkomponente mit einem Bezugswert wird die Steifigkeit der Aufhängung entsprechend eines Vergleichsergebnisses geändert.

Es ist Aufgabe der Erfindung, ein einfaches Verfahren zur Ermittlung von Vertikalbeschleunigungen des Fahrzeugaufbaus unter Einsparung zusätzlicher Sensoren zu schaffen.

Diese Aufgabe wird durch die Merkmale des Patentanspruchs 1 gelöst.

Erfindungsgemäß werden in einem Kraftfahrzeug alle Radgeschwindigkeiten gemessen und zur Bildung eines zur Dombeschleunigung direkt proportionalen Beschleunigungssignals ein Differenzsignal der Radgeschwindigkeitssignale einer Fahrzeugseite gebildet und anschließend aus diesem Differenzsignal die Signalanteile des für den Fahrzeugaufbau charakteristischen Frequenzbereiches extrahiert.

Es hat sich empirisch herausgestellt, daß sich das im Resonanzfrequenzbereich gefilterte Differenzsignal der Radgeschwindigkeitssignale einer Fahrzeugseite direkt proportional zur vertikalen Dombeschleunigung des vorderen Rades verhält. Die vertikale Dombeschleunigung des hinteren Rades entspricht ebenfalls dem gefilterten Differenzsignal im Resonanzfrequenzbereich, jedoch um einen Zeitraum verzögert, der vom Radstand und der Fahrzeuggeschwindigkeit abhängt. Werden die Differenzsignale der Radgeschwindigkeitssignale der beiden Fahrzeugseiten vor der Filterung addiert, wird ein der Dombeschleunigung der Vorderachse bzw. der vertikalen Beschleunigung des vorderen Fahrzeugaufbaus proportionales Ausgangssignal erhalten. Die Dombeschleunigung der Hinterachse des Kraftfahrzeuges wird wiederum durch das zeitverzögerte Ausgangssignal für die Dombeschleunigung der Vorderachse gewonnen.

Die erfindungsgemäß ermittelte Dombeschleunigung ist unabhängig von Einflüssen, die durch Betriebszustände verursacht werden, die eine gleichzeitige und gleichsinnige Änderung der Radgeschwindigkeiten einer Fahrzeugseite hervorrufen, wie z.B. Kurvenfahrten, Beschleunigungs- oder Bremsvorgänge.

Mit diesem erfindungsgemäßen Verfahren werden direkt absolute Werte der vertikalen Beschleunigung des Fahrzeugaufbaus bzw. des Domes eines Rades oder einer Achse eines Kraftfahrzeuges erhalten, ohne hierfür zusätzliche und kostenintensive Sensoren oder Auswertevorrichtungen einsetzen zu müssen. Radgeschwindigkeitssensoren sind in den meisten Kraftfahrzeugen aufgrund von Antiblockiersystemen ohnehin vorhandene Sensoren, die im erfindungsgemäßen Verfahren multifunktional verwendet werden.

Nach einer vorteilhaften Weiterbildung gemäß Patentanspruch 2 werden die Signalanteile des Differenzsignals zur Extraktion des zur Dombeschleunigung proportionalen Beschleunigungssignals außerhalb eines charakteristischen Frequenzbereichs von etwa 0,2 Hz bis 4 Hz unterdrückt.

Zur Extraktion der Signalanteile des Differenzsignals im Frequenzbereich von ca. 0,2 Hz bis 4 Hz wird vorzugsweise ein Bandpaßfilter eingesetzt. Der Bandpaßfilter ist vorzugsweise derart ausgestaltet, daß als Ausgangssignal lediglich ein sinusförmiges Signal mit der Resonanzfrequenz, die für den Fahrzeugaufbau charakteristisch ist, ausgegeben wird.

In der Zeichnung ist ein Ausführungsbeispiel der Erfindung dargestellt. Es zeigt
- Fig. 1: ein Beispiel für die Ermittlung der vertikalen Dombeschleunigung eines Rades und
- Fig. 2: einen Meßschrieb, der einen durch das erfindungsgemäße Verfahren ermittelten Dombeschleunigungsverlauf mit einem mittels eines Beschleunigungssensors gemessenen Dombeschleunigungsverlauf vergleicht.

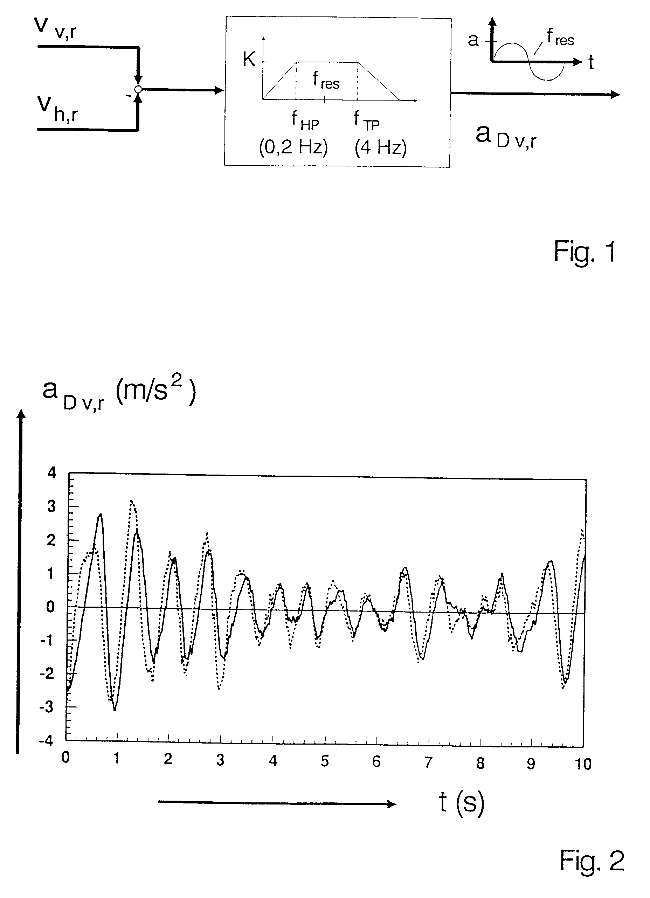

In Fig. 1 wird das Radgeschwindigkeitssignal v_{h,r} eines hinteren rechten Rades von dem Radgeschwindigkeitssignal v_{v,r} eines rechten vorderen Rades subtrahiert. Die Radgeschwindigkeitssignale v_{v,r} und v_{h,r} resultieren aus den Ausgangssignalen hier nicht dargestellter Radgeschwindigkeits- bzw. Raddrehzahlsensoren. Derartige Raddrehzahlsensoren sind in vielen Kraftfahrzeugen ohnehin vorhandene Sensoren, die insbesondere für Antiblockiersysteme oder Antriebsschlupfregelsysteme benötigt werden.

Das Differenzsignal der beiden Radgeschwindigkeitssignale v_{v,r} und v_{h,r} wird als Eingangssignal einem Bandpaßfilter zugeleitet. Da die charakteristische Resonanzfrequenz für den Fahrzeugaufbau in etwa zwischen 0,2 und 4 Hz liegt, ist die untere Grenzfrequenz f_{HP} des Bandpaßfilters 0,2 Hz und die obere Grenzfrequenz f_{TP} 4 Hz. Darüber hinaus umfaßt das Bandpaßfilter einen Verstärker mit dem Verstärkungsfaktor K. Der Bandpaßfilter ist derart ausgelegt, daß das der vertikalen Dombeschleunigung des vorderen rechten Rades proportionale Ausgangssignal a_{Dv,r} ein in etwa sinusförmiges Signal mit der Resonanzfrequenz fᵣₑₛ ergibt. Dieses Ausgangssignal entspricht zumindest nahezu dem gemessenen Zeitsignal der Dombeschleunigung selbst. Beispielsweise kann zur Darstellung der Intensität der vertikalen Dom- bzw. Fahrzeugaufbaubeschleunigung auch eine Hüllkurve der jeweils maximalen Amplitude a des sinusförmigen Signals gebildet werden. Die Verwendung eines Bandpaßfilters ist lediglich ein Beispiel zur Unterdrückung der Signalanteile des Differenzsignals außerhalb des Frequenzbereiches zwischen 0,2 und 4 Hz.

In Fig. 2 ist das Ausgangssignal a_{Dv,r} von Fig. 1 gestrichelt dargestellt, während die tatsächlich gemessene Dombeschleunigung des vorderen rechten Rades durch die durchgezogene Linie dargestellt ist. Zum einen zeigt sich eine weitgehende quantitative Übereinstimmung der beiden Dombeschleunigungsverläufe, zum anderen ist darüber hinaus festzustellen, daß die durch das erfindungsgemäße Verfahren berechnete vertikale Dombeschleunigung schneller ermittelt wird als die durch den speziellen Beschleunigungssensor gemessene vertikale Dombeschleunigung. Dieses Verhalten ist besonders vorteilhaft für schnelle Regelsysteme.

Somit trägt die Erfindung zu einem sehr einfachen, genauen und kostengünstigen Verfahren zur Ermittlung von Vertikalbeschleunigungen, insbesondere von Aufbau- bzw. Dombeschleunigungen, bei Radaufhängungskomponenten in Kraftfahrzeugen bei.

## Patentansprüche

1. Verfahren zur Steuerung oder Überwachung von Radaufhängungskomponenten in Kraftfahrzeugen mittels Messung aller Radgeschwindigkeiten und mittels Bildung eines Beschleunigungssignals aus den Radgeschwindigkeitssignalen, dadurch gekennzeichnet, daß zur Bildung eines zur vertikalen Dombeschleunigung direkt proportionalen Beschleunigungssignals (a_{Dv,r}) ein Differenzsignal der Radgeschwindigkeitssignale (v_{v,r}, v_{h,r}) einer Fahrzeugseite gebildet wird und daß aus diesem Differenzsignal die Signalanteile des für den Fahrzeugaufbau charakteristischen Frequenzbereiches extrahiert werden.

2. Verfahren nach Patentanspruch 1, dadurch gekennzeichnet, daß die Signalanteile des Differenzsignals zur Extraktion des zur Dombeschleunigung proportionalen Beschleunigungssignals (a_{Dv,r}) außerhalb eines charakteristischen Frequenzbereichs von etwa 0,2 Hz bis 4 Hz unterdrückt werden.

## Claims

1. A method for the control or monitoring of wheel suspension components in motor vehicles using the measurement of all wheel speeds and using the formation of an acceleration signal from the wheel speed signals, **characterised in that**, for the creation of an acceleration signal (a_{Dv,r}) directly proportional to the vertical dome acceleration, a difference signal is formed from the wheel speed signals (v_{v,r}, v_{h,r}) on one vehicle side and that from this difference signal the parts of the signal of the characteristic frequency range for the vehicle body are extracted.

2. A method according to Claim 1, **characterised in that** the signal contributions of the difference signal for extraction of the acceleration signal (a_{Dv,r}) proportional to the dome acceleration are suppressed outside a characteristic frequency range of about 0.2 Hz to 4Hz.

## Revendications

1. Procédé de commande ou de surveillance des composants de suspension de roues de véhicules automobiles par la mesure de toutes les vitesses de roues et formation d'un signal d'accélération à partir des signaux de vitesse de roues,
caractérisé en ce que
pour former un signal d'accélération (a_{Dv,r}) directement proportionnel à l'accélération verticale de l'appui de la suspension sur la carrosserie, on forme un signal de différence entre les signaux de vitesse de roues (v_{v,r}, v_{h,r}) d'un côté du véhicule et
à partir de ce signal de différence on extrait les parties de signal de la plage de fréquence caractéristique de la carrosserie du véhicule.

2. Procédé selon la revendication 1,
caractérisé en ce qu'
on élimine les parties de signal contenues dans le signal de différence pour l'extraction du signal d'accélération (a_{Dv,r}) proportionnel à l'accélération de l'appui, en dehors d'une plage de fréquences caractéristiques comprise entre sensiblement 0,2 Hz et 4 Hz.
